# EUROPEAN PATENT SPECIFICATION

(11) **EP 4 057 430 B1**
(45) Date of publication and mention of the grant of the patent: **29.04.2026**
(21) Application number: 21831925.9
(22) Date of filing: 01.07.2021
(51) Int. Cl.: H01M 50/184, H01M 50/171, H01M 50/109, H01M 50/153

(54) **BUTTON-TYPE SECONDARY BATTERY AND METHOD FOR MANUFACTURING SAME**
KNOPFSEKUNDÄRBATTERIE UND HERSTELLUNGSVERFAHREN DAFÜR
BATTERIE SECONDAIRE DE TYPE BOUTON ET SON PROCÉDÉ DE FABRICATION

(30) Priority: 01.07.2020 KR 20200081088
(43) Date of publication of application: 14.09.2022
(73) Proprietor: LG Energy Solution, Ltd., Seoul 07335 (KR)
(72) Inventor: CHO, Min Su, Daejeon 34122 (KR); KIM, Byung Sup, Daejeon 34122 (KR); SUNG, Joo Hwan, Daejeon 34122 (KR); LEE, Yong Gon, Daejeon 34122 (KR); PARK, Geun Young, Daejeon 34122 (KR); KIM, Min Gyu, Daejeon 34122 (KR); KIM, Min Seon, Daejeon 34122 (KR); JUNG, Yeong Hun, Daejeon 34122 (KR); CHAE, Sang Hak, Daejeon 34122 (KR)
(74) Representative: Hoffmann Eitle
(86) International application number: PCT/KR2021/008376
(87) International publication number: WO 2022/005232

(56) References cited:
- CN-A- 111 276 646
- CN-U- 208 819 929
- KR-A- 20050 052 218
- KR-A- 20160 022 137
- KR-A- 20180 036 086
- KR-A- 20180 036 086
- KR-A- 20190 010 566
- US-A- 5 725 967

## Description

### TECHNICAL FIELD

The present invention relates to a button-type secondary battery and a method for manufacturing the same, and more particularly, to a button-type secondary battery in which coupling and adhesion between a lower can and an upper can increase through a gasket, and a method for manufacturing the same.

### BACKGROUND ART

In general, secondary batteries refer to chargeable and dischargeable, unlike primary batteries that are not chargeable. The secondary batteries are being widely used for mobile phones, notebook computers, and camcorders, electric vehicles, and the like.

The secondary battery comprises a button-type secondary battery having high energy density, high output, and long lifespan. The button-type secondary battery comprises an electrode assembly, a lower can accommodating the electrode assembly, an upper can coupled to the lower can, and a gasket sealing the lower can and the upper can.

However, in the button-type secondary battery, if fitting force is high when the lower can and the upper can are coupled to each other, the gasket is damaged, and if coupling force and adhesion between the lower can and the upper can decrease, and the fitting force is weak, the gasket is prevented from being damaged, but there is a problem in that the coupling force and adhesion between the lower can and the upper can decrease due to weakening in sealing force between the lower can and the upper can.

US 5 725 967 A concerns a battery container and method of manufacture. The container includes a housing, a cover and a gasket. The housing is folded around an outer edge of the cover. Grooves in the cover and grooves in the housing are positioned to contact the gasket during assembly of the container.

CN 111 276 646 A concerns a shell structure, battery structure and electronic equipment. The shell structure of a button cell includes an upper cover, a lower cover, and a connecting member disposed between the upper and lower covers. A part of the upper cover and a part of the lower cover are respectively inlaid to realize a clamping connection between the connecting member and the covers.

KR 2018 0036086 A concerns a cylindrical battery cell. A triangular-shaped groove is formed on an inner surface of an upper end of a metal can of the cylindrical battery cell.

### DISCLOSURE OF THE INVENTION

### TECHNICAL PROBLEM

The present invention is invented to solve the above problems, and an object of the present invention is to provide a button-type secondary battery in which structures of a lower can and an upper can are improved to increase in coupling force and adhesion between the lower can and the upper can through a gasket and also to prevent the gasket from being damaged, and a method for manufacturing the same.

### TECHNICAL SOLUTION

A button-type secondary battery according to the present invention for achieving the above object is defined in claim 1 and comprises: a lower can serving as a first electrode terminal; an upper can coupled to surround the lower can and serving as a second electrode terminal; and a gasket provided between the lower can and the upper can, wherein a recessed lower insertion groove and a recessed upper insertion groove are formed in a surface of the lower can and a surface of the upper can, which are in close contact with the gasket, respectively, and the lower insertion groove and the upper insertion groove are spaced apart from each other so as not to face each other.

The lower insertion groove or the upper insertion groove is provided in two or more, and the two or more lower insertion grooves or the two or more upper insertion grooves are provided to be connected to each other in a direction in which the lower can and the upper can are clamped.

The two or more lower insertion grooves or the two or more upper insertion grooves are provided to increase in size in the direction in which the lower can and the upper can are clamped.

A portion of the gasket may be introduced into the lower insertion groove and the upper insertion groove by clamping of the lower can and the upper can to form a lower insertion protrusion and an upper insertion protrusion on a surface of the gasket, whereby a contact area between the lower can and the gasket may increase by the lower insertion protrusion, and a contact area between the upper can and the gasket may increase by the upper insertion protrusion.

The gasket may comprise an outer part provided between the lower can and the upper can, an inner part supported on an inner wall of the lower can, and a connection part configured to connect an upper end of the outer part to an upper end of the inner part.

A method for manufacturing a button-type secondary battery comprises: a preparation process of preparing a lower can having a recessed lower insertion groove, an upper can having a recessed upper insertion groove, and a gasket disposed between the lower can and the upper can; an accommodation process of accommodating an electrode assembly, in which a first electrode, a separator, and a second electrode are alternately stacked, in the lower can; a disposition process of disposing the gasket on an upper portion of the lower can, wherein the gasket comprises an outer part supported on an outer circumferential surface of the lower can, an inner part supported on an inner circumferential surface of the lower can, and a connection part connecting the outer part to the inner part; and a clamping process of disposing the upper can on an upper portion of the lower can to clamp the lower can and the upper can, thereby manufacturing the button-type secondary battery, wherein, in the preparation process, the lower insertion groove formed in the lower can and the upper insertion groove formed in the upper can are disposed to be spaced apart from each other so as not to face each other when the lower can and the upper can are coupled to each other.

In the preparation process, the lower insertion groove or the upper insertion groove is provided in two or more, and the two or more lower insertion grooves or the two or more upper insertion grooves may be formed to be connected to each other in a direction in which the lower can and the upper can are clamped. The two or more lower insertion grooves or the two or more upper insertion grooves are provided to increase in size in the direction in which the lower can and the upper can are clamped.

In the clamping process, when the lower can and the upper can are clamped, a portion of the gasket may be introduced into the lower insertion groove and the upper insertion groove form a lower insertion protrusion and an upper insertion protrusion on a surface of the gasket, whereby a contact area between the lower can and the gasket may increase by the lower insertion protrusion, and a contact area between the upper can and the gasket may increase by the upper insertion protrusion.

### ADVANTAGEOUS EFFECTS

In the button-type secondary battery of the present invention, the recessed lower insertion groove and the recessed upper insertion groove may be formed in the lower can and the upper can, which are in close contact with the gasket, respectively. Here, the lower insertion groove and the upper insertion groove may be disposed to be spaced apart from each other so as not to face each other. Therefore, when the lower can and the upper can are clamped, a portion of the gasket may be introduced into each of the lower insertion groove and the upper insertion groove to form each of the lower insertion protrusion and the upper insertion protrusion on the surface of the gasket, thereby preventing the gasket from being damaged, and as a result, the adhesion and the coupling force between the lower can and the upper can may increase.

In addition, in the button-type secondary battery of the present invention, the lower insertion groove or the upper insertion groove may have the triangular shape that gradually decreases in width toward the bottom. Therefore, the gasket may be stably introduced into the entire lower insertion groove and the entire upper insertion groove, and as a result, the adhesion and the coupling force between the lower can and the upper can may increase.

In addition, in the button-type secondary battery of the present invention, the two or more lower insertion grooves or the two or more upper insertion grooves may be provided to be connected to each other. Therefore, the two or more lower insertion protrusions and two or more upper insertion protrusions may be formed on the surface of the gasket.

In addition, in the button-type secondary battery of the present invention, the pressing protrusion for pressing the gasket may be formed on the lower can below the lower insertion groove. Therefore, the fixing force of the gasket may increase, and thus, a portion of the gasket may be smoothly inserted into each of the lower insertion groove and the upper insertion groove, and as a result, the insertion protrusion may be effectively formed on the surface of the gasket.

### BRIEF DESCRIPTION OF THE DRAWINGS

FIG. 1 is an exploded perspective view of a button-type secondary battery according to a first illustrative example.
FIG. 2 is an assembly cross-sectional view of the button-type secondary battery according to the first illustrative example.
FIG. 3 is a cross-sectional view illustrating another example of lower and upper insertion grooves in the button-type secondary battery according to the first illustrative example.
FIG. 4 is a flowchart illustrating a method for manufacturing a button-type secondary battery according to the first illustrative example.
FIG. 5 is a cross-sectional view illustrating a preparation process in the method for manufacturing the button-type secondary battery according to the first illustrative example.
FIG. 6 is a cross-sectional view illustrating an accommodation process in the method for manufacturing the button-type secondary battery according to the first illustrative example.
FIG. 7 is a cross-sectional view illustrating a disposition process in the method for manufacturing the button-type secondary battery according to the first illustrative example.
FIG. 8 is a cross-sectional view illustrating a clamping process in the method for manufacturing the button-type secondary battery according to the first illustrative example.
FIG. 9 is a cross-sectional view of a button-type secondary battery according to an embodiment of the present invention.
FIG. 10 is a cross-sectional view of a button-type secondary battery according to a second illustrative example.

### MODE FOR CARRYING OUT THE INVENTION

Hereinafter, illustrative examples and an embodiment of the present invention, which is within the scope of the appended claims, will be described in detail with reference to the accompanying drawings in such a manner that the technical idea of the present invention may easily be carried out by a person with ordinary skill in the art to which the invention pertains. The present invention may, however, be embodied in different forms within the scope of the appended claims. In the drawings, anything unnecessary for describing the present invention will be omitted for clarity, and also like reference numerals in the drawings denote like elements.

### [Button-type secondary battery according to first illustrative example]

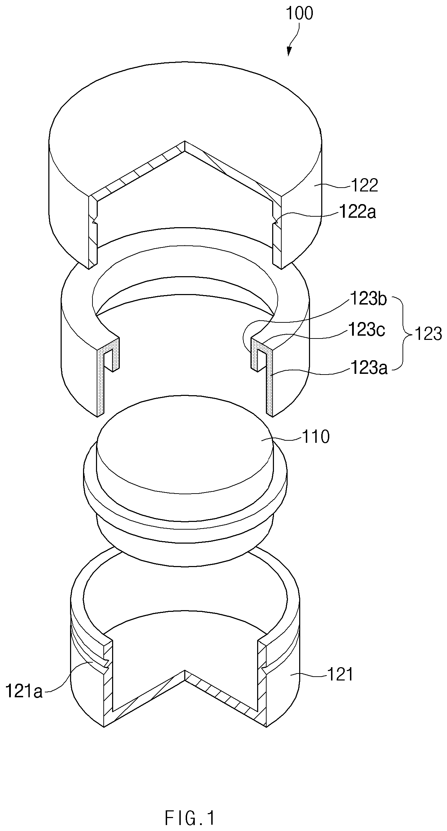

As illustrated in FIGS. 1 to 3, a button-type secondary battery 100 according to a first illustrative example is a secondary battery, of which a length of a diameter is greater than a height, and comprises an electrode assembly 110 and a can assembly 120 accommodating the electrode assembly 110.

The button-type secondary battery is referred as a coin cell, also referred to as a Ruben battery, an RM battery, and a mercury battery. Such a button-type secondary battery may be made small and thus be widely used in hearing aids, portable lighters, wireless microphones, cameras, watches, and the like. Also, zinc is used for a negative electrode, and mercury oxide is used for a positive electrode. In addition, zinc oxide and potassium hydroxide are used for an electrolyte.

### Electrode assembly

The electrode assembly 110 has a three-layered structure in which a first electrode, a separator, and a second electrode are sequentially stacked. The electrode assembly is not limited to the three-layered structure and may have a three or more-layered structure in which a first electrode and a second electrode are alternately stacked with a separator interposed therebetween.

Here, the separator is formed to be larger than each of the first electrode and the second electrode, and thus, the separator prevents the first electrode and the second electrode from being grounded, and as a result, an accident due to short circuit is prevented. The first electrode is a negative electrode, and the second electrode is a positive electrode.

### Can assembly

The can assembly 120 comprises a lower can 121 connected to a first electrode of the electrode assembly 110 and serving as a first electrode terminal, an upper can 122 connected to a second electrode of the electrode assembly 110, coupled to surround the lower can 121, and serving as a second electrode terminal, and a gasket 123 provided between the lower can 121 and the upper can 122 to insulate the lower can and the upper can from each other.

The button-type secondary battery 100 according to the first illustrative example has a structure, in which adhesion and coupling force between the lower can 121 and the upper can 122 increase.

That is, the lower can 121 has a recessed lower insertion groove 121a in a surface thereof, which is in close contact with the gasket 123, and the upper can 122 has a recessed upper insertion groove 122a in a surface thereof, which is in close contact with the gasket 123.

Here, the lower insertion groove 121a and the upper insertion groove 122a are disposed to be spaced apart from each other so as not to face each other when viewed in a state in which the lower can 121 and the upper can 122 are coupled to each other.

Thus, a portion of the gasket 123 is introduced (i.e., inserted) into the lower insertion groove 121a and the upper insertion groove 122a by clamping the lower can 121 and the upper can 122 to form a lower insertion protrusion 123a-1 and an upper insertion protrusion 123a-2 on a surface of the gasket 123, respectively. As a result, a contact area between the lower can 121 and the gasket 123 may increase by the lower insertion protrusion 123a-1 to increase in adhesion and coupling force. In addition, a contact area between the upper can 122 and the gasket 123 may increase by the upper insertion protrusion 123a-2 to increase in adhesion and coupling force.

The clamping refers to press-fitting or clamping two objects.

In more detail, the gasket 123 is disposed on an upper portion of the lower can 121, and then the upper can 122 is disposed on an upper portion of the gasket 123. Next, the upper can 122 is pressed in a direction of the lower can 121 to bond the upper can 122 and the lower can 121 to each other. Here, while the gasket 123 disposed between the upper can 122 and the lower can 121 is compressed, a portion of the gasket 123 is introduced into the lower insertion groove 121a and the upper insertion groove 122a. Thus, a lower insertion protrusion 123a-1 and an upper insertion protrusion 123a-2 are formed on the surface of the gasket 123.

Particularly, the lower insertion groove 121a and the upper insertion groove 122a are disposed in the lower can 121 and the upper can 122 and spaced apart from each other so as not to face each other. Thus, the lower insertion protrusion 123a-1 and the upper insertion protrusion 123a-2 formed on the surface of the gasket 123 are spaced apart from each other so as not to face each other. As a result, an amount of insertion of the gasket 123, which is inserted into each of the lower insertion groove 121a and the upper insertion groove 122a, may be sufficiently secured. Thus, since the amount of insertion of the gasket, which is inserted into the lower insertion groove 121a and the upper insertion groove 122a, is sufficiently secured, the lower insertion protrusion 123a-1 and the upper insertion protrusion 123a-2 may be stably formed, and as a result, the adhesion and the coupling force between the lower can 121 and the upper can 122 may increase.

Here, the lower insertion protrusion 123a-1 may be provided to adhere to the lower insertion groove 121a, and the upper insertion protrusion 123a-2 may be provided to adhere to the upper insertion groove 122a. For example, the lower insertion protrusion 123a-1 may adhere to the lower insertion groove 121a through an adhesive, and the upper insertion protrusion 123a-2 may adhere to the upper insertion groove 122a through an adhesive. Thus, the coupling force between the lower insertion protrusion 123a-1 and the lower insertion groove 121a may increase, and the coupling force between the upper insertion protrusion 123a-2 and the upper insertion groove 122a may increase.

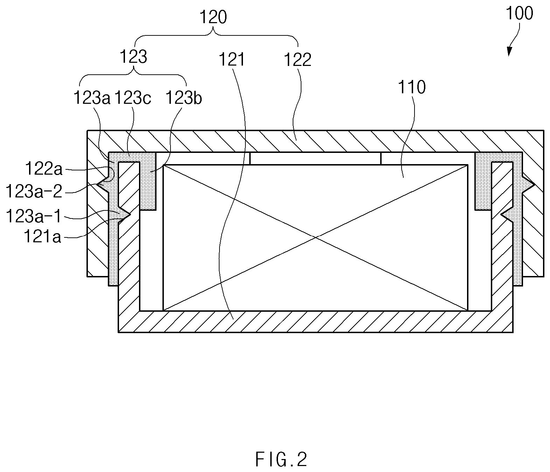

As another example of the button-type secondary battery 100 according to the first illustrative example, the upper insertion groove 122a may have an area greater than that of the lower insertion groove 121a. That is, referring to FIG. 2, a contact area between the upper can 122 and the gasket 123 is less than that between the lower can 121 and the gasket 123. Thus, the upper insertion groove 122a is formed to be larger than the lower insertion groove 121a to increase in contact area between the upper can 122 and the gasket 123, thereby preventing an electrode from leaking.

As another example of the button-type secondary battery 100 according to the first illustrative example, the lower insertion groove 121a or the upper insertion groove 122a may have a triangular shape of which a width gradually decreases toward the bottom. That is, the amount of insertion of the gasket 123 gradually decreases toward the bottom of the lower insertion groove 121a or the upper insertion groove 122a. Thus, the lower insertion groove 121a or the upper insertion groove 122a may be formed in the triangular shape, and thus, the amount of insertion of the gasket 123 may be stably secured up to the bottom of the lower insertion groove 121a or the upper insertion groove 122a. As a result, the insertion protrusions 123a-1 and 123a-2 may be stably formed on the surface of the gasket.

The lower insertion groove 121a or the upper insertion groove 122a may be formed in a semicircular shape that gradually decreases in width toward the bottom.

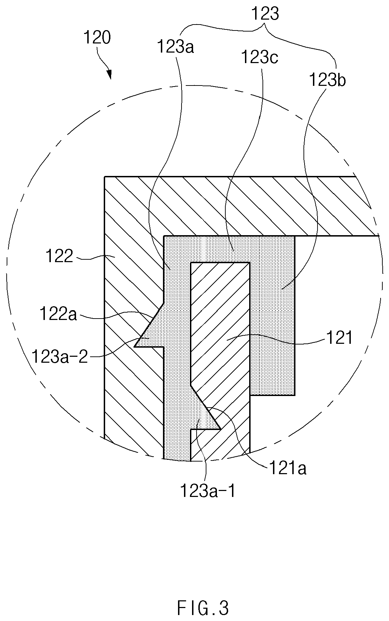

Here, the lower insertion groove 121a or the upper insertion groove 122a may be formed in the form of a right-angled triangle in which an inner wall facing the lower can 121 is horizontal when viewed in FIG. 3. Thus, each of the insertion protrusions 123a-1 and 123a-2 formed on the gasket 123 may also be formed in the form of a right-angled triangle. That is, when clamping the lower can 121 and the upper can 122, a portion of the gasket may be caught in the lower insertion groove 121a or the horizontal inner wall of the upper insertion groove 122a, and thus, the amount of insertion of the gasket, which is inserted into the lower insertion groove 121a or the upper insertion groove 122a, may be sufficiently secured, and as a result, the insertion protrusion may be smoothly formed on the surface of the gasket.

In the button-type secondary battery 100 according to the first illustrative example, the gasket 123 comprises an outer part 123a provided between the lower can 121 and the upper can 122, an inner part 123b supported on the inner wall of the lower can 121, and a connection part 123c connecting an upper end of the outer part 123a to an upper end of the inner part 123b. Here, the upper insertion protrusion 123a-2 and the lower insertion protrusion 123a-1 are formed on both surfaces of the outer portion 123a, respectively. Thus, the adhesion between the gasket 123 and the lower can 121 and between the gasket 123 and the upper can 122 may increase, and as a result, the electrolyte nay be significantly prevented from leaking.

The inner part 123b is supported on the inner wall of the lower can 121 to prevent the electrode assembly 110 from being in contact with the inner wall of the lower can 121.

Therefore, in the button-type secondary battery 100 according to the first illustrative example, the recessed lower insertion groove 121a and the recessed upper insertion groove 122a are formed in the lower can 121 and the upper can 122, respectively. Here, the lower insertion groove 121a and the upper insertion groove 122a are disposed to be spaced apart from each other so as not to face each other. When the lower can 121 and the upper can 122 are clamped, a portion of the gasket 123 may be introduced into each of the lower insertion groove 121a and the upper insertion groove 122a to form an insertion protrusion 123a, and the adhesion and the coupling force between the lower can 121 and the upper can 122 may increase through the insertion protrusion 123a.

Hereinafter, a method for manufacturing a button-type secondary battery according to a first illustrative example will be described.

### [Method for manufacturing button-type secondary battery according to first illustrative example]

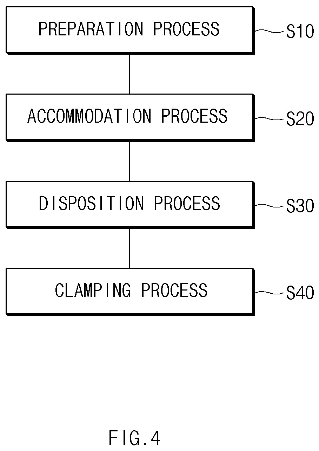

As illustrated in FIGS. 4 to 8, a method for manufacturing a button-type secondary battery according to the first illustrative example includes a preparation process (S10), an accommodation process (S20), a disposition process (S30), and a clamping process (S40).

### Preparation process

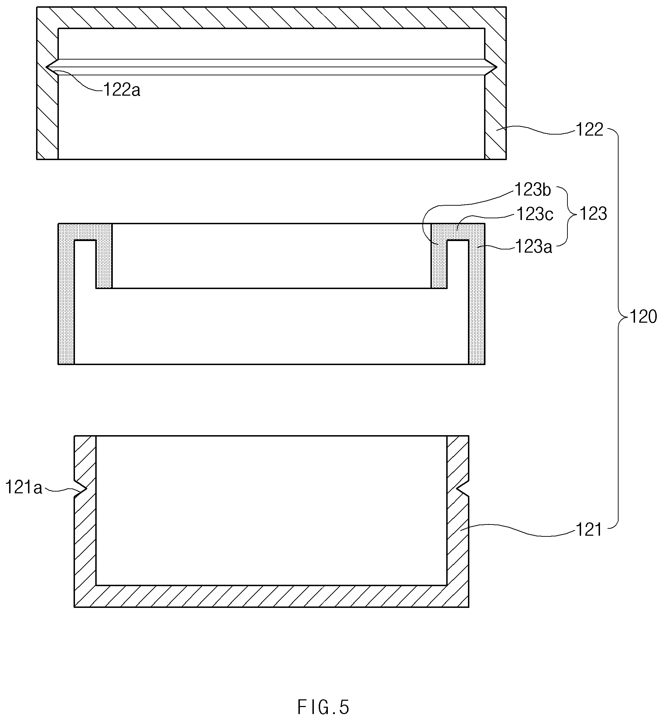

In the preparation process (S10), referring to FIG. 5, a lower can 121, an upper can 122, and a gasket 123 disposed between the lower can 121 and the upper can 122 are prepared.

The lower can 121 has an accommodation groove, which accommodates an electrode assembly in a top surface thereof, and a recessed lower insertion groove 121a in an outer circumferential surface thereof. Particularly, a lower insertion groove 121a is formed along a circumferential surface of the lower can 121, and then both ends of the lower insertion groove 121a are connected to each other.

The upper can 122 has a coupling groove, into which the lower can is coupled to be inserted, in a bottom surface thereof and a recessed upper insertion groove 122a in an inner circumferential surface of the upper can 122, i.e., a wall surface of the coupling groove. Particularly, an upper insertion groove 122a is formed along a circumferential surface of the upper can 122, and then both ends of the lower insertion groove 121a are connected to each other.

The gasket 123 comprises an outer part 123a provided between the lower can 121 and the upper can 122, an inner part 123b disposed on the inner wall of the lower can 121, and a connection part 123c connecting an upper end of the outer part 123a to an upper end of the inner part 123b.

The lower insertion groove 121a formed in the lower can 121 and the upper insertion groove 122a formed in the upper can 122 are spaced apart from each other so as not to face each other That is, referring to FIG. 5, the lower insertion groove 121a is disposed at a lower side, and the upper insertion groove 122a is formed to be disposed above the lower insertion groove 121a so that the lower insertion groove 121a and the upper insertion groove 122a are spaced apart so as not to face each other.

Particularly, each of the lower insertion groove 121a and the upper insertion groove 122a is formed in a triangular shape. Thus, when the lower can 121 and the upper can 122 are clamped, a portion of the gasket 123 disposed between the lower can 121 and the upper can 122 may be induced to be smoothly introduced up to the bottom of each of the lower insertion groove 121a and the upper insertion groove 122a. That is, an amount of insertion of the gasket inserted into the lower insertion groove 121a and the upper insertion groove 122a may be sufficiently secured.

In addition, inner surfaces of the lower insertion groove 121a and the upper insertion groove 122a facing the upper can 122 are formed as a horizontal plane perpendicular to a direction in which the upper can 122 is clamped, and an inner surface facing the lower can 121 is formed as an inclined surface. That is, when the lower can 121 and the upper can 122 are clamped, a portion of the gasket 123 may be guided along the inclined surface and then smoothly introduced up to the bottom of each of the lower insertion groove 121a and the upper insertion groove 122a. In addition, when clamping of the lower can 121 and the upper can 122 is completed, the coupling between the lower can 121 and the upper can 122 may be improved through a portion of the gasket, which is supported on the horizontal plane.

### Accommodation process

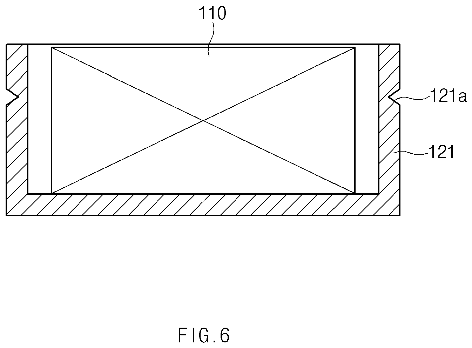

In the accommodation process (S20), referring to FIG. 6, the electrode assembly 110 in which the first electrode, the separator, and the second electrode are alternately stacked is accommodated in an accommodation groove of the lower can 121.

### Disposing process

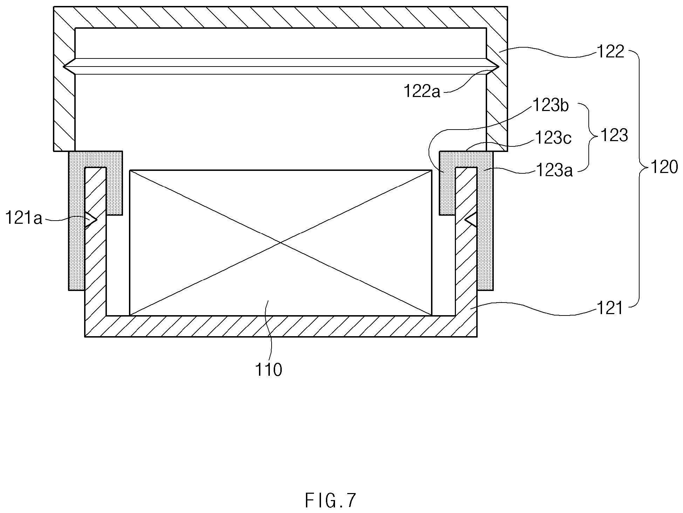

In the disposition process (S30), referring to FIG. 7, the gasket 123 is disposed on the lower can 121. Then, the outer part 123a of the gasket 123 is supported on the outer circumferential surface of the lower can 121, the inner part 123b is supported on the inner circumferential surface of the lower can 121, and the connection part 123c is supported on an upper end of the lower can 121.

### Clamping process

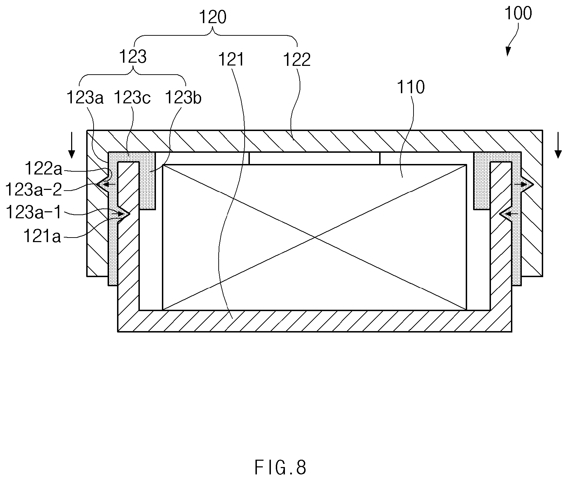

Referring to FIG. 8, in the clamping process (S40), the upper can 122 is disposed on the lower can 121, and then, the lower can 121 and the upper can 122 are clamped. That is, the button-type secondary battery 100 is manufactured by rolling the lower can 121 and the upper can 122 to be coupled to each other.

Here, when the lower can 121 and the upper can 122 are clamped, a portion of the gasket 123 is inserted into each of the lower insertion groove 121a and the upper insertion groove 122a, and thus, each of a lower insertion protrusion 123a-1 and an upper insertion protrusion 123a-2 is formed on the surface of the gasket 123. Here, the insertion protrusion has the same triangular shape as the lower insertion groove 121a and the upper insertion groove 122a. Thus, the coupling force and adhesion between the lower can 121 and the upper can 122 may increase.

That is, a contact area between the lower can 121 and the gasket 123 may increase by the lower insertion protrusion 123a-1 to increase in adhesion and bonding force. In addition, a contact area between the upper can 122 and the gasket 123 may increase by the upper insertion protrusion 123a-2 to increase in adhesion and coupling force.

Therefore, the method for manufacturing the button-type secondary battery according to the first illustrative example may manufacture the button-type secondary battery 100, in which the coupling force and the adhesion increase.

Hereinafter, in descriptions of an embodiment of the present invention, constituents having the same function as the above-mentioned illustrative example have been given the same reference numeral in the drawings, and thus duplicated description will be omitted.

### [Button-type secondary battery according to embodiment of the present invention]

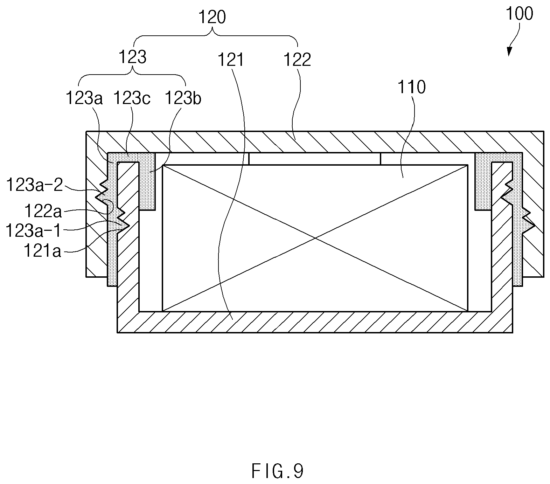

As illustrated in FIG. 9, a button-type secondary battery 100 according to an embodiment of the present invention has a lower can 121 having a lower insertion groove 121a formed in an outer circumferential surface thereof, and an upper can 122 having an upper insertion groove 122a in an inner circumferential surface thereof.

Here, the lower insertion groove 121a or the upper insertion groove 122a is provided in two or more, and the two or more lower insertion grooves 121a or the two or more upper insertion grooves 122a has a structure in which the lower can 121 and the upper can 122 are connected to each other in a direction in which the lower can 121 and the upper can 122 are clamped. That is, the two or more lower insertion grooves 121a or the two or more upper insertion grooves 122a are provided to be connected to each other in a vertical direction as illustrated in FIG. 9.

Thus, in the button-type secondary battery 100 according to the embodiment of the present invention, when the lower can 121 and the upper can 122 are clamped, a portion of the gasket 123 may be introduced into the two or more lower insertion grooves 121a or the two or more upper insertion grooves 122a to form two or more insertion protrusions 123a-1. Thus, coupling force and adhesion between the lower can 121 and the upper can 122 may significantly increase.

Each of the two or more lower insertion grooves 121a or the two or more upper insertion grooves 122a gradually increases in size in the direction in which the lower can 121 and the upper can 122 are clamped (a downward direction when viewed in FIG. 9). Of course, the two or more lower insertion grooves 121a and the two or more upper insertion grooves 122a are spaced apart from each other so as not to face each other. Thus, a portion of the gasket 123 may be induced to be smoothly introduced into the two or more lower insertion grooves 121a or the two or more upper insertion grooves 122a.

In the method for manufacturing the button-type secondary battery, which has such a structure, according to the embodiment of the present invention, in the preparation process, the lower insertion groove 121a or the upper insertion groove 122a is provided in two or more in the lower can 121 and the upper can 122. Particularly, the two or more lower insertion grooves 121a or two or more of the upper insertion grooves 122a are connected to each other in a direction, in which the lower can 121 and the upper can 121 are clamped, and are formed to gradually increase in size.

In addition, when the lower can 121 and the upper can 122 are clamped in the clamping process, a portion of the gasket 123 is introduced into the two or more lower insertion grooves 121a or the two or more upper insertion grooves 122a to form two or more insertion protrusions 123a. Since the two or more insertion protrusions are formed, coupling force and adhesion between the lower can 121 and the upper can 122 significantly increase.

### [Button-type secondary battery according to second illustrative example]

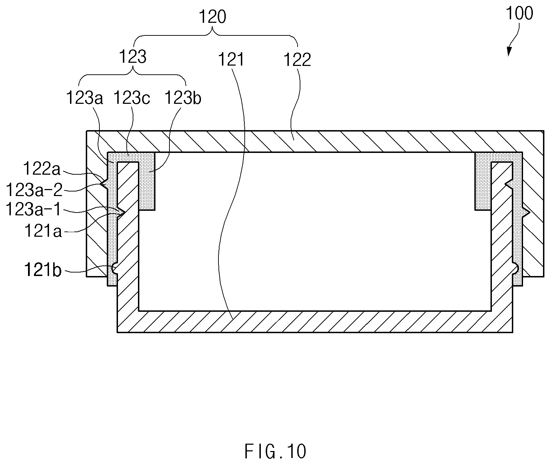

As illustrated in FIG. 10, a button-type secondary battery 100 according to a second illustrative example comprises a lower can 121, an upper can 122, and a gasket 123. Here, the lower can 121 comprises a lower insertion groove 121a in an outer circumferential surface thereof and a pressing protrusion 121b below the lower insertion groove 121a.

Here, the pressing protrusion 121b presses a surface of the gasket 123 provided between the lower can 121 and the upper can 122 to increase in fixing force of the gasket 123. Thus, when the can 121 and the upper can 122 are clamped, the gasket may be prevented from being tensioned by the pressing protrusion to sufficiently ensure an amount of insertion of the gasket 123 introduced into the lower insertion groove 121a and the upper insertion groove 122a.

At least one or more, preferably, three or more pressing protrusions may be provided on the outer circumferential surface of the lower can. The outer circumferential surface of the pressing protrusion may be coated with a protective layer made of a synthetic resin material for preventing the gasket from being damaged. The pressing protrusion may be formed in a semicircular shape to prevent damage to the gasket.

Therefore, the button-type secondary battery 100 according to the second illustrative example comprises the pressing protrusion 121b on the lower can 121. Thus, when the lower can 121 and the upper can 122 are clamped, a portion of the gasket 123 may be compressed so that a portion of the gasket 123 is more smoothly introduced into the lower insertion groove 121a and the upper insertion groove 122a, and a result, coupling force and adhesion between the lower can 121 and the upper can 122 may increase.

Accordingly, the scope of the present invention is defined by the appended claims more than the foregoing description and the exemplary embodiments described therein. Various modifications may be made within the scope of the claims.

### [Description of the Symbols]

100: Button-type secondary battery
110: Electrode assembly
120: Can assembly
121: Lower can
122: Upper can
123: Gasket

## Claims

1. A button-type secondary battery (100) comprising:
a lower can (121) serving as a first electrode terminal;
an upper can (122) coupled to surround the lower can (121) and serving as a second electrode terminal; and
a gasket (123) provided between the lower can (121) and the upper can (122),
wherein a recessed lower insertion groove (121a) and a recessed upper insertion groove (122a) are formed in a surface of the lower can (121) and a surface of the upper can (122), which are in close contact with the gasket (123), respectively, and
the lower insertion groove (121a) and the upper insertion groove (122a) are spaced apart from each other so as not to face each other,
wherein the lower insertion groove (121a) or the upper insertion groove (122a) is provided in two or more, and
the two or more lower insertion grooves (121a) or the two or more upper insertion grooves (122a) are provided to be connected to each other in a direction in which the lower can (121) and the upper can (122) are clamped, and
wherein the two or more lower insertion grooves (121a) or the two or more upper insertion grooves (122a) are provided to increase in size in the direction in which the lower can (121) and the upper can (122) are clamped.

2. The button-type secondary battery (100) of claim 1, wherein a portion of the gasket (123) is introduced into the lower insertion groove (121a) and the upper insertion groove (122a) by clamping of the lower can (121) and the upper can (122) to form a lower insertion protrusion (123a-1) and an upper insertion protrusion (123a-2) on a surface of the gasket (123),
whereby a contact area between the lower can (121) and the gasket (123) increases by the lower insertion protrusion (123a-1), and
a contact area between the upper can (122) and the gasket (123) increases by the upper insertion protrusion (123a-2).

3. The button-type secondary battery (100) of claim 1, wherein the gasket (123) comprises an outer part (123a) provided between the lower can (121) and the upper can (122), an inner part (123b) supported on an inner wall of the lower can (121), and a connection part (123c) configured to connect an upper end of the outer part (123a) to an upper end of the inner part (123b).

4. A method for manufacturing a button-type secondary battery (100), the method comprising:
a preparation process (S10) of preparing a lower can (121) having a recessed lower insertion groove (121a), an upper can (122) having a recessed upper insertion groove (122a), and a gasket (123) disposed between the lower can (121) and the upper can (122);
an accommodation process (S20) of accommodating an electrode assembly (110), in which a first electrode, a separator, and a second electrode are alternately stacked, in the lower can (121);
a disposition process (S30) of disposing the gasket (123) on an upper portion of the lower can (121), wherein the gasket (123) comprises an outer part (123a) supported on an outer circumferential surface of the lower can (121), an inner part (123b) supported on an inner circumferential surface of the lower can (121), and a connection part (123c) connecting the outer part (123a) to the inner part (123b); and
a clamping process (S40) of disposing the upper can (122) on an upper portion of the lower can (121) to clamp the lower can (121) and the upper can (122), thereby manufacturing the button-type secondary battery (100),
wherein, in the preparation process (S10), the lower insertion groove (121a) formed in the lower can (121) and the upper insertion groove (122a) formed in the upper can (122) are disposed to be spaced apart from each other so as not to face each other when the lower can (121) and the upper can (122) are coupled to each other,
wherein, in the preparation process (S10), the lower insertion groove (121a) or the upper insertion groove (122a) is provided in two or more, and
the two or more lower insertion grooves (121a) or the two or more upper insertion grooves (122a) are formed to be connected to each other in a direction in which the lower can (121) and the upper can (122) are clamped, and
wherein the two or more lower insertion grooves (121a) or the two or more upper insertion grooves (122a) are provided to increase in size in the direction in which the lower can (121) and the upper can (122) are clamped.

5. The method of claim 4, wherein, in the clamping process (S40), when the lower can (121) and the upper can (122) are clamped, a portion of the gasket (123) is introduced into the lower insertion groove (121a) and the upper insertion groove (122a) to form a lower insertion protrusion (123a-1) and an upper insertion protrusion (123a-2) on a surface of the gasket (123),
whereby a contact area between the lower can (121) and the gasket (123) increases by the lower insertion protrusion (123a-1), and
a contact area between the upper can (122) and the gasket (122) increases by the upper insertion protrusion (123a-2).

## Patentansprüche

1. Knopfsekundärbatterie (100) umfassend:
einen unteren Behälter (121), der als erster Elektrodenanschluss dient;
einen oberen Behälter (122), der so gekoppelt ist, dass er den unteren Behälter (121) umgibt, und der als zweiter Elektrodenanschluss dient; und
eine Dichtung (123), die zwischen dem unteren Behälter (121) und dem oberen Behälter (122) bereitgestellt ist,
wobei eine vertiefte untere Einsetzrille (121a) und eine vertiefte obere Einsetzrille (122a) in einer Oberfläche des unteren Behälters (121) und einer Oberfläche des oberen Behälters (122), die jeweils in engem Kontakt mit der Dichtung (123) stehen, gebildet sind, und
die untere Einsetzrille (121a) und die obere Einsetzrille (122a) voneinander so beabstandet sind, dass sie nicht zueinander zeigen,
wobei die untere Einsetzrille (121a) oder die obere Einsetzrille (122a) in der Anzahl von zwei oder mehr bereitgestellt sind, und
die zwei oder mehr unteren Einsetzrillen (121a) oder die zwei oder mehr oberen Einsetzrillen (122a) bereitgestellt sind, um in einer Richtung, in der der untere Behälter (121) und der obere Behälter (122) geklemmt sind, miteinander verbunden zu werden, und
wobei die zwei oder mehr unteren Einsetzrillen (121a) oder die zwei oder mehr oberen Einsetzrillen (122a) bereitgestellt sind, um in der Richtung, in der der untere Behälter (121) und der obere Behälter (122) geklemmt werden, an Größe zuzunehmen.

2. Knopfsekundärbatterie (100) nach Anspruch 1, wobei ein Abschnitt der Dichtung (123) durch Klemmen des unteren Behälters (121) und des oberen Behälters (122) in die untere Einsetzrille (121a) und die obere Einsetzrille (122a) eingeführt wird, um auf einer Oberfläche der Dichtung (123) einen unteren Einsetzvorsprung (123a-1) und einen oberen Einsetzvorsprung (123a-2) zu bilden,
wobei eine Kontaktfläche zwischen dem unteren Behälter (121) und der Dichtung (123) durch den unteren Einsetzvorsprung (123a-1) zunimmt, und
eine Kontaktfläche zwischen dem oberen Behälter (122) und der Dichtung (123) durch den oberen Einsetzvorsprung (123a-2) zunimmt.

3. Knopfsekundärbatterie (100) nach Anspruch 1, wobei die Dichtung (123) einen äußeren Teil (123a), der zwischen dem unteren Behälter (121) und dem oberen Behälter (122) bereitgestellt ist, einen inneren Teil (123b), der an einer inneren Wand des unteren Behälters (121) abgestützt ist, und einen Verbindungsteil (123c), der so ausgebildet ist, dass er ein oberes Ende des äußeren Teils (123a) mit einem oberen Ende des inneren Teils (123b) verbindet, umfasst.

4. Verfahren zur Herstellung einer Knopfsekundärbatterie (100), wobei das Verfahren Folgendes umfasst:
einen Vorbereitungsprozess (S10) des Vorbereitens eines unteren Behälters (121), der eine vertiefte untere Einsetzrille (121a) aufweist, eines oberen Behälters (122), der eine vertiefte obere Einsetzrille (122a) aufweist, und einer Dichtung (123), die zwischen dem unteren Behälter (121) und dem oberen Behälter (122) angeordnet ist;
einen Unterbringungsprozess (S20) des Unterbringens einer Elektrodenanordnung (110), in der eine erste Elektrode, ein Separator und eine zweite Elektrode abwechselnd gestapelt sind, in dem unteren Behälter (121);
einen Anordnungsprozess (S30) des Anordnens der Dichtung (123) an einem oberen Abschnitt des unteren Behälters (121), wobei die Dichtung (123) einen äußeren Teil (123a), der an einer äußeren Umfangsoberfläche des unteren Behälters (121) abgestützt ist, einen inneren Teil (123b), der an einer inneren Umfangsoberfläche des unteren Behälters (121) abgestützt ist, und einen Verbindungsteil (123c), der den äußeren Teil (123a) mit dem inneren Teil (123b) verbindet, umfasst; und
einen Klemmprozess (S40) des Anordnens des oberen Behälters (122) an einem oberen Abschnitt des unteren Behälters (121), um den unteren Behälter (121) und den oberen Behälter (122) zu klemmen, wodurch die Knopfsekundärbatterie (100) hergestellt wird,
wobei in dem Vorbereitungsprozess (S10) die im unteren Behälter (121) gebildete untere Einsetzrille (121a) und die im oberen Behälter (122) gebildete obere Einsetzrille (122a) so angeordnet sind, dass sie voneinander beabstandet sind, sodass sie nicht zueinander zeigen, wenn der untere Behälter (121) und der obere Behälter (122) miteinander gekoppelt sind,
wobei in dem Vorbereitungsprozess (S10) die untere Einsetzrille (121a) oder die obere Einsetzrille (122a) in der Anzahl von zwei oder mehr bereitgestellt sind, und
die zwei oder mehr unteren Einsetzrillen (121a) oder die zwei oder mehr oberen Einsetzrillen (122a) gebildet sind, um in einer Richtung, in der der untere Behälter (121) und der obere Behälter (122) geklemmt sind, miteinander verbunden zu werden, und
wobei die zwei oder mehr unteren Einsetzrillen (121a) oder die zwei oder mehr oberen Einsetzrillen (122a) bereitgestellt sind, um in der Richtung, in der der untere Behälter (121) und der obere Behälter (122) geklemmt werden, an Größe zuzunehmen.

5. Verfahren nach Anspruch 4, wobei in dem Klemmprozess (S40), wenn der untere Behälter (121) und der obere Behälter (122) geklemmt werden, ein Abschnitt der Dichtung (123) in die untere Einsetzrille (121a) und die obere Einsetzrille (122a) eingesetzt wird, um auf einer Oberfläche der Dichtung (123) einen unteren Einsetzvorsprung (123a-1) und einen oberen Einsetzvorsprung (123a-2) zu bilden,
wobei eine Kontaktfläche zwischen dem unteren Behälter (121) und der Dichtung (123) durch den unteren Einsetzvorsprung (123a-1) zunimmt, und
eine Kontaktfläche zwischen dem oberen Behälter (122) und der Dichtung (122) durch den oberen Einsetzvorsprung (123a-2) zunimmt.

## Revendications

1. Batterie secondaire de type bouton (100), comprenant :
une coque inférieure (121), servant de première borne d'électrode ;
une coque supérieure (122), reliée de manière à entourer la coque inférieure (121) et servant de deuxième borne d'électrode ; et
un joint d'étanchéité (123), disposé entre la coque inférieure (121) et la coque supérieure (122),
dans laquelle une rainure d'insertion inférieure (121a) en creux et une rainure d'insertion supérieure (122a) en creux sont formées dans une surface de la coque inférieure (121) et une surface de la coque supérieure (122), qui sont respectivement en contact étroit avec le joint d'étanchéité (123), et
la rainure d'insertion inférieure (121a) et la rainure d'insertion supérieure (122a) sont espacées l'une de l'autre de façon à ne pas être en face l'une de l'autre,
dans laquelle la rainure d'insertion inférieure (121a) ou la rainure d'insertion supérieure (122a) est prévue au nombre de deux ou plus, et
les rainures d'insertion inférieures (121a) au nombre de deux ou plus ou les rainures d'insertion supérieures (122a) au nombre de deux ou plus sont formées de manière à être reliées l'une à l'autre dans une direction selon laquelle la coque inférieure (121) et la coque supérieure (122) sont serrées, et
dans laquelle les rainures d'insertion inférieures (121a) au nombre de deux ou plus ou les rainures d'insertion supérieures (122a) au nombre de deux ou plus sont prévues de manière à augmenter de dimension dans la direction dans laquelle la coque inférieure (121) et la coque supérieure (122) sont serrées.

2. Batterie secondaire de type bouton (100) selon la revendication 1, dans laquelle une partie du joint d'étanchéité (123) est introduite dans la rainure d'insertion inférieure (121a) et la rainure d'insertion supérieure (122a) par serrage de la coque inférieure (121) et de la coque supérieure (122) pour former une saillie d'insertion inférieure (123a-1) et une saillie d'insertion supérieure (123a-2) sur une surface du joint d'étanchéité (123),
de telle sorte qu'une zone de contact entre la coque inférieure (121) et le joint d'étanchéité (123) augmente par la saillie d'insertion inférieure (123a-1), et
une zone de contact entre la coque supérieure (122) et le joint d'étanchéité (123) augmente par la saillie d'insertion supérieure (123a-2).

3. Batterie secondaire de type bouton (100) selon la revendication 1, dans laquelle le joint d'étanchéité (123) comprend une partie externe (123a) disposée entre la coque inférieure (121) et la coque supérieure (122), une partie interne (123b) soutenue sur une paroi interne de la coque inférieure (121), et une partie de liaison (123c) configurée pour relier une extrémité supérieure de la partie externe (123a) à une extrémité supérieure de la partie interne (123b).

4. Procédé de fabrication d'une batterie secondaire de type bouton (100), le procédé comprenant :
un processus de préparation (S10), consistant à préparer une coque inférieure (121) présentant une rainure d'insertion inférieure (121a) en creux, une coque supérieure (122) présentant une rainure d'insertion supérieure (122a) en creux, et un joint d'étanchéité (123) placé entre la coque inférieure (121) et la coque supérieure (122) ;
un processus de logement (S20), consistant à loger un ensemble d'électrodes (110), dans lequel une première électrode, un séparateur et une deuxième électrode sont empilés en alternance, dans la coque inférieure (121) ;
un processus de disposition (S30), consistant à disposer le joint d'étanchéité (123) sur une portion supérieure de la coque inférieure (121), dans lequel le joint d'étanchéité (123) comprend une partie externe (123a) soutenue sur une surface circonférentielle externe de la coque inférieure (121), une partie interne (123b) soutenue sur une surface circonférentielle interne de la coque inférieure (121), et une partie de liaison (123c) reliant la partie externe (123a) à la partie interne (123b) ; et
un processus de serrage (S40), consistant à disposer la coque supérieure (122) sur une portion supérieure de la coque inférieure (121) pour serrer la coque inférieure (121) et la coque supérieure (122), fabriquant ainsi la batterie secondaire de type bouton (100),
dans lequel, dans le processus de préparation (S10), la rainure d'insertion inférieure (121a) formée dans la coque inférieure (121) et la rainure d'insertion supérieure (122a) formée dans la coque supérieure (122) sont aménagées de manière à être espacées l'une de l'autre de façon à ne pas être en face l'une de l'autre lorsque la coque inférieure (121) et la coque supérieure (122) sont reliées l'une à l'autre,
dans lequel, dans le processus de préparation (S10), la rainure d'insertion inférieure (121a) ou la rainure d'insertion supérieure (122a) est prévue en nombre de deux ou plus, et
les rainures d'insertion inférieures (121a) au nombre de deux ou plus ou les rainures d'insertion supérieures (122a) au nombre de deux ou plus sont formées de manière à être reliées l'une à l'autre dans une direction dans laquelle la coque inférieure (121) et la coque supérieure (122) sont serrées, et
dans lequel les rainures d'insertion inférieures (121a) au nombre de deux ou plus ou les rainures d'insertion supérieures (122a) au nombre de deux ou plus sont prévues de manière à augmenter en dimension dans la direction dans laquelle la coque inférieure (121) et la coque supérieure (122) sont serrées.

5. Procédé selon la revendication 4, dans lequel, dans le processus de serrage (S40), lorsque la coque inférieure (121) et la coque supérieure (122) sont serrées, une partie du joint d'étanchéité (123) est introduite dans la rainure d'insertion inférieure (121a) et la rainure d'insertion supérieure (122a) pour former une saillie d'insertion inférieure (123a-1) et une saillie d'insertion supérieure (123a-2) sur une surface du joint d'étanchéité (123),
de telle sorte qu'une surface de contact entre la coque inférieure (121) et le joint d'étanchéité (123) augmente par la saillie d'insertion inférieure (123a-1), et
une surface de contact entre la coque supérieure (122) et le joint d'étanchéité (122) augmente par la saillie d'insertion supérieure (123a-2).
